# EUROPÄISCHE PATENTSCHRIFT

(11) **EP 3 533 658 B1**
(45) Veröffentlichungstag und Bekanntmachung des Hinweises auf die Patenterteilung: **28.04.2021**
(21) Anmeldenummer: 18159787.3
(22) Anmeldetag: 02.03.2018
(51) Int. Cl.: H02J 7/00, B60L 53/14, B60L 53/30

(54) **LADESTATION UND LADESYSTEM FÜR ELEKTROMOBILE**
CHARGING STATION AND CHARGING SYSTEM FOR ELECTRIC CARS
STATION DE CHARGEMENT ET SYSTÈME DE CHARGEMENT POUR VEHICULE ÉLECTRIQUES

(43) Veröffentlichungstag der Anmeldung: 04.09.2019
(73) Patentinhaber: EnBW Energie Baden-Württemberg AG, 76131 Karlsruhe (DE)
(72) Erfinder: Hettich, Andreas, 70734 Fellbach (DE)
(74) Vertreter: Durm Patentanwälte PartG mbB

(56) Entgegenhaltungen:
- EP-A1- 2 815 913
- DE-A1-102015 110 023
- US-A1- 2011 055 037
- US-A1- 2013 020 993

## Beschreibung

Die vorliegende Erfindung betrifft eine Ladestation sowie ein System und ein Verfahren zum Laden einer Batterie eines Elektromobils.

Die fortschreitende Entwicklung hin zur Elektromobilität erfordert das Bereitstellen einer entsprechenden Ladeinfrastruktur zum Laden von Elektromobilen wie Elektroautos, Elektro-Lastkraftwagen oder auch Elektrozweiräder. Entsprechende Ladestationen sind dabei beispielsweise als Ladesäulen oder auch als Wandladestationen (Wallbox) ausgebildet. Die Ladestationen stellen die für das Laden der Batterien notwendige elektrische Leistung bereit. Elektromobile können zumeist im Umfeld der Ladestation abgestellt werden und für die Dauer des Ladevorgangs angekoppelt werden.

Die Ladestationen können dabei Wechselstrom (AC) oder auch Gleichstrom (DC) bereitstellen. Für den eigentlichen Batterieladevorgang ist normalerweise das Anlegen einer Gleichspannung an die Batterie erforderlich. Wenn die Ladestation als Gleichstrom-Ladestation ausgebildet ist, kann gegebenenfalls auf eine weitere Umwandlung verzichtet werden und die bereitgestellte Spannung direkt an die Batterie angelegt werden. Das Ladegerät ist sozusagen in der Ladestation integriert. Fahrzeuge, die mit Wechselstrom geladen werden, verfügen über ein im Fahrzeug verbautes Ladegerät, das den Wechselstrom in Gleichstrom umwandelt. Vorteil eines Wechselstrom-Ladevorgangs ist, dass Wechselstrom in den meisten Haushalten sowie an anderen Stellen verfügbar ist. Daher ist keine weitere Umwandlung notwendig. Nachteilig ist die oftmals geringere erzielbare Ladeleistung. Moderne Schnellladesysteme basieren zumeist auf einer Gleichstromladung bei hoher Spannung, beispielsweise 400 oder 800 V. Bei derartigen Spannungen können Ladeleistungen im Bereich von 50 kW erreicht werden, sodass ein Ladevorgang eines Elektrofahrzeugs in einer Zeitspanne von ungefähr einer Stunde realisiert werden kann. Die erzielbaren Leistungen bei Wechselstrom-Ladestationen sind oft wesentlich geringer.

Aus Netzsicht sind Ladestationen heutzutage oft basierend auf den bekannten Betriebsmitteln aufgebaut. In einer Verteilstation wird eine Mittelspannung (beispielsweise 10, 20 oder 30 kV) in eine Niederspannung (beispielsweise 230, 400 oder 1.000 V) transformiert. Die Niederspannung wird dann über ein entsprechendes Verteilnetz verteilt. Durch das Niederspannungs-Verteilnetz werden sowohl angeschlossene Endverbraucher als auch angeschlossene Ladestationen versorgt.

Für die Netzbetreiber besteht in diesem Zusammenhang eine Herausforderung darin, dass mit zunehmender Anzahl von Ladestationen, die an einem einzelnen Niederspannungs-Kabelstrang angeschlossen sind, die Auslastung dieses Kabelstrangs stark ansteigen kann. Zudem erhöht sich auch der Spannungsabfall auf dem Kabelstrang. Oft sind zum gleichen Zeitpunkt, beispielsweise nach Feierabend, hohe Leistungen zum Laden angeschlossener Elektromobile notwendig. Pro Kabelstrang kann daher nur eine bestimmte Anzahl an Ladestationen vorgesehen werden. Sofern dann weitere Ladestationen erforderlich sind, muss ein weiterer Kabelstrang verlegt werden. Üblicherweise ist der Stromfluss im Niederspannungsnetz auf 250 A oder 315 A pro Kabelstrang begrenzt.

In heutigen Niederspannungsnetzen werden in Verteilerstationen oft 630 kVA-Transformatoren verwendet. In typischen Planungsansätzen wäre ein derartiger Transformator überlastet, wenn 300 Wohneinheiten, von denen 80 Prozent über ein Elektroauto verfügen, angeschlossen werden. Problematisch an der Verwendung größerer Transformatoren ist der mit steigender Leistung wachsende Raum- und Platzbedarf, der in der vorhandenen Infrastruktur und zulässigen Bebauung oft nicht erfüllt werden kann.

In diesem Zusammenhang werden in DE 10 2016 102 053 A1 ein Schaltungssystem für eine Ladestation, eine Ladestation und eine Verwendung einer Ladestation offenbart. Das Schaltungssystem ist zum Aufladen eines Energiespeichers in einem Fahrzeug vorgesehen. Das Schaltungssystem umfasst einen Transformator mit voneinander galvanisch getrennten Transformatorausgängen. Ein erstes Subsystem und ein zweites Subsystem sind jeweils mit einem der Transformatorausgänge verbunden. Das erste Subsystem und das zweite Subsystem umfassen jeweils einen Gleichrichter, der einem Gleichspannungswandler vorgeschaltet ist. Der Gleichspannungswandler ist an seiner Eingangsseite oder an seiner Ausgangsseite an eine Umschaltlogik gekoppelt. Insbesondere ist es vorgesehen, dass das erste Subsystem an eine Dreiecksschaltung im Transformatorausgang und das zweite Subsystem an eine Sternschaltung im Transformatorausgang angeschlossen sind.

Die US 2013/0020993 A1 betrifft eine Multimodus-Ladestation für Elektrofahrzeuge. Eine verkleinerte und vereinfachte Multimodus-Ladestation für elektrische Fahrzeuge wird bereitgestellt, die es einem Benutzer ermöglicht, zwischen einer AC- und DC-Ausgabe zu wählen. An eine Spannungsquelle ist ein DC-Konverter angeschlossen, der dann an einen DC-Bus oder an eine elektrische Verbindung ausgibt. Der DC-Bus kann von einer DC-Ladeausrüstung oder einem DC-AC-Inverter, der an eine AC-Ladeausrüstung angeschlossen ist, verwendet werden, wodurch eine DC- und AC-Lademöglichkeit bereitgestellt wird.

Die US 2011/0055037 A1 betrifft ein Ladesystem, das an eine Energiequelle anschließbar ist.

Die DE 10 2015 110 023 A1 betrifft eine Ladestation sowie ein Verfahren zum Laden eines Plug-in-Kraftfahrzeugs an einer Ladesäule. Die Ladestation umfasst einen Leistungstransformator und Gleichrichtermodule. Der Leistungs transformator weist sekundärseitig galvanisch getrennte Ableitungen auf. Die Ableitungen sind zumindest teilweise mit den Gleichrichtermodulen verbunden. Der Leistungstransformator sowie die Gleichrichtermodule sind derart konfiguriert, dass die Gleichrichtermodule eine Niedergleichspannung abgeben, wenn der Leistungstransformator mit einer Mittelspannung gespeist wird.

Die EP 2 185 913 A1 betrifft ein Ladesystem für elektrische Fahrzeuge. Das Ladesystem umfasst einen Eingangsabschnitt zum Anbinden an ein Wechselspannungsnetz und einen Ausgangsabschnitt zum Anbinden an ein Elektrofahrzeug. Weiterhin umfasst das Ladesystem einen Umwandlungsabschnitt zum Umwandeln einer Wechselspannung in eine Gleichspannung sowie eine Steuereinheit, die zum Steuern des Umwandlungsabschnitts ausgebildet ist.

Ausgehend hiervon stellt sich der vorliegenden Erfindung die Aufgabe, unter Berücksichtigung der aktuellen Stromnetz-Infrastruktur ein effizientes Aufladen von Batterien von Elektromobilen zu ermöglichen. Einerseits soll auch bei der absehbaren weiteren Verbreitung der Elektromobilität die Versorgungssicherheit gewährleistet werden, andererseits sollen die notwendigen Anpassungen der Netzinfrastruktur bzw. die Kosten minimal gehalten werden.

Diese Aufgabe wird erfindungsgemäß von einer Ladestation zum Laden einer Batterie eines Elektromobils gelöst. Die Ladestation umfasst:
eine Netzanschlusseinheit zum Anbinden der Ladestation an einen Mittelspannungsnetzabschnitt und zum Beziehen einer Wechselstrom-Eingangsspannung, wobei die Wechselstrom-Eingangsspannung eine Mittelspannung ist;
eine Transformatoreinheit zum Umwandeln der Wechselstrom-Eingangsspannung und zum Bereitstellen einer Wechselstrom-Ladespannung und einer Gleichstrom-Ladespannung; und
eine Ladeeinheit zum Ankoppeln des Elektromobils, um die Batterie des Elektromobils mit der bereitgestellten Wechselstrom-Ladespannung und/oder der bereitgestellten Gleichstrom-Ladespannung zu laden,
wobei die Ladestation als Ladesäule oder als Wandladestation ausgebildet ist.

Ein weiterer Aspekt der Erfindung betrifft ein Verfahren zum Laden einer Batterie eines Elektromobils, mit den Schritten:
Anbinden einer Ladestation an einen Mittelspannungsnetzabschnitt und Beziehen einer Wechselstrom-Eingangsspannung, wobei die Wechselstrom-Eingangsspannung eine Mittelspannung ist;
Umwandeln der Wechselstrom-Eingangsspannung und Bereitstellen einer Wechselstrom-Ladespannung und einer Gleichstrom-Ladespannung; und
Ankoppeln des Elektromobils, um die Batterie des Elektromobils mit der bereitgestellten Wechselstrom-Ladespannung und/oder der bereitgestellten Gleichstrom-Ladespannung zu laden,
wobei die Ladestation als Ladesäule oder als Wandladestation ausgebildet ist.

Zudem betrifft ein Aspekt der Erfindung ein System zum Laden einer Batterie eines Elektromobils, mit:
einer Ladestation wie oben beschrieben; und
einem Mittelspannungsnetzabschnitt, an den die Ladestation angebunden ist, um die Wechselstrom-Eingangsspannung zu beziehen.

Bevorzugte Ausgestaltungen der Erfindung werden in den abhängigen Ansprüchen beschrieben. Es versteht sich, dass die Ladestation sowie das System und das Verfahren entsprechend der für die Ladestation und das System in den abhängigen Ansprüchen beschriebenen Ausgestaltungen ausgeführt sein können.

Erfindungsgemäß ist es vorgesehen, dass die Ladestation direkt an einen Abschnitt (bzw. Teil) des Mittelspannungsnetzes angebunden ist und eine Wechselstrom-Eingangsspannung von diesem Mittelspannungsnetz bezieht. Das Mittelspannungsnetz ist dabei vorzugsweise ein 6, 10, 20 oder 30 kV-Netz, an das ansonsten üblicherweise lediglich Umspannstationen angeschlossen sind, die die Mittelspannung in eine Niederspannung transformieren, um Endverbraucher zu versorgen. Demgegenüber ist die Netzanschlusseinheit der erfindungsgemäßen Ladestation zum direkten Anschluss an die höheren Spannungen ausgeführt. Insbesondere verfügt die Netzanschlusseinheit vorzugsweise über die erforderlichen Sicherheits- und Isolationseinrichtungen.

Die Wechselstrom-Eingangsspannung wird in der Transformatoreinheit dann einerseits in eine Wechselstrom-Ladespannung und andererseits in eine Gleichstrom-Ladespannung umgewandelt. Hierbei wird die Spannung ausgehend von der eingehenden höheren Spannung des Mittelspannungsnetzes vorzugsweise verringert, beispielsweise auf 400 oder 800 V.

Über die Ladeeinheit können die beiden erzeugten Ladespannungen dann bereitgestellt werden, um das Laden der Batterie des Elektromobils zu ermöglichen. Insbesondere ist unter dem Begriff Ankoppeln in diesem Zusammenhang ein lösbares Anschließen zu verstehen, wobei die Ladeeinheit vorzugsweise einen entsprechenden Stecker sowie ein Kabel, das an das Elektromobil (entspricht in diesem Fall einem sog. Plug-In Elektromobil) anschließbar ist, umfasst. Es versteht sich, dass die Ladeeinheit aber auch in anderer Weise ausgeführt sein kann, beispielsweise zum induktiven Laden oder zum Laden eines aus einem Elektromobil entnehmbaren Moduls (Wechsel-Akku).

Unter dem Begriff Elektromobil werden hierin insbesondere alle Arten von voll-und teilelektrisch (hybridelektrisch) angetriebenen Fahrzeugen mit aufladbarem Energiespeicher (Akku) verstanden, beispielsweise Elektroautos, Elektro-Lastkraftwagen oder auch Elektrozweiräder. Das erfindungsgemäße System umfasst neben der Ladestation noch einen Abschnitt eines Mittelspannungsnetzes, an den die Ladestation angebunden ist.

Im Vergleich zu bisherigen Ladestationen, bei denen ein Anschluss an das Niederspannungsnetz erfolgte, wird die erfindungsgemäße Ladestation direkt an das Mittelspannungsnetz angeschlossen. Eine Transformation der Mittelspannung in die benötigte Ladespannung findet innerhalb der Säule statt. Hierdurch wird erreicht, dass die für den Ladevorgang erforderlichen vergleichsweise hohen Leistungen bereitgestellt werden können, ohne dass es zu einer übermäßigen Netzbelastung durch große Ströme kommt. Es wird vermieden, dass bisherige Umspannstationen zur Transformation der Mittelspannung in die Niederspannung über Gebühr belastet werden. Es ist nicht mehr erforderlich, dass größere Transformatoren mit hohen Leistungsreserven bereitgestellt werden. Dadurch, dass ein Mittelspannungskabel aufgrund der höheren Spannung deutlich mehr Energie transportieren kann als ein Niederspannungskabel, wird die mögliche Anzahl anschließbarer Ladestationen pro Kabelstrang sehr groß.

Insoweit stellt die Erfindung einen dezentralen Ansatz dar, bei dem es nicht notwendig ist, zunächst den Zwischenschritt über das Niederspannungsnetz zu gehen. Durch Auflösen der Notwendigkeit eines zentralen Transformators wird der Raumbedarf auf die Aufstellfläche verlagert bzw. reduziert sich. Eine Anpassung der bestehenden Infrastruktur wird weitgehend vermieden, sodass Kosten eingespart werden können.

Zudem ermöglicht die erfindungsgemäße Ladestation durch das gleichzeitige Bereitstellen einer Wechselstrom-Ladespannung und einer Gleichstrom-Ladespannung eine flexible Anwendbarkeit. Ein Anschluss und ein Laden eines Elektromobils sind möglich, egal ob ein Elektromobil mit oder ohne integriertem Ladegerät versorgt werden soll.

In einer bevorzugten Ausgestaltung ist die Transformatoreinheit als Solid State Transformator, SST, ausgebildet ist. Ein SST erlaubt die gleichzeitige Erzeugung einer Wechselspannung und einer Gleichspannung. Aufgrund seiner Funktionsweise benötigt ein Solid State Transformator im Vergleich zu einem herkömmlichen Zwei- oder Dreiwicklungstransformator weniger Stellfläche bei gleicher Übertragungsleistung. Zudem kann die Umsetzung wesentlich kostengünstiger erfolgen. Insbesondere ermöglicht ein SST, dass gleichzeitig eine Wechselstrom-Ladespannung und eine Gleichstrom-Ladespannung bereitgestellt werden. Ein Einspeisen des SST mit hoher Spannung (Mittelspannung) ist möglich. Eine skalierbare Integration von Ladestationen in bestehende Netze kann sichergestellt werden.

Bevorzugt umfasst die Transformatoreinheit eine Übertragungseinheit zum Ausführen einer Mittelfrequenzübertragung zur Spannungstransformation, vorzugsweise mit einer Frequenz zwischen 100 Hz und 50 kHz. Zum Durchführen einer Übertragung (Transformation) kann die eingehende Wechselstrom-Eingangsspannung (Mittelspannung) in eine (vorzugsweise niedrigere) Ladespannung transformiert werden. Die Spannungstransformation erfolgt dabei vorzugsweise mit einer Frequenz zwischen 100 Hz und 50 kHz. Üblicherweise werden Frequenzen im Bereich von mehreren kHz verwendet. Bei derartig hohen Frequenzen können hohe Leistungen bei geringem Platzbedarf übertragen werden. Bei vergleichbarer Leistung ist derselbe Transformator bzw. Übertrager wesentlich kleiner. Hierdurch wird erreicht, dass die Transformatoreinheit in eine Ladesäule oder in eine Wandladestation integriert werden kann. Die Notwendigkeit eines externen Transformators zwischen der Spannung des Mittelspannungsnetzes und der Spannung des Niederspannungsnetzes entfällt.

In einer weiteren bevorzugten Ausgestaltung umfasst die Transformatoreinheit eine primärseitige Leistungselektronikeinheit, die dazu ausgebildet ist, eine Gleichrichtung und eine Frequenzanpassung der Wechselstrom-Eingangsspannung durchzuführen. Um die Frequenz der eingehenden Wechselstrom-Eingangsspannung anzupassen, ist eine eingangsseitige (primärseitige) Leistungselektronik vorgesehen, die eine Anpassung der Frequenz und eine Gleichrichtung erlaubt. Die Frequenz wird erhöht. Üblicherweise hat die eingehende Wechselstrom-Eingangsspannung eine Frequenz von 50 Hz. Die von der Leistungselektronik auf der Eingangsseite erzeugte Spannung hat eine wesentlich höhere Frequenz von beispielsweise einigen kHz. Durch die Verwendung einer Leistungselektronik kann eine entsprechende Gleichrichtung und Frequenzanpassung vorgenommen werden.

In einer vorteilhaften Ausgestaltung umfasst die Transformatoreinheit eine sekundärseitige Leistungselektronikeinheit, die dazu ausgebildet ist, eine Frequenzanpassung durchzuführen, um die Gleichstrom-Ladespannung zu erzeugen; und eine Frequenzanpassung und eine Wechselrichtung durchzuführen, um die Wechselstrom-Ladespannung zu erzeugen. Ausgangsseitig, also sekundärseitig, wird die Frequenz erneut angepasst, um eine Ladespannung zu erzeugen. Für die Gleichstrom-Ladespannung ist es erforderlich, dass eine Frequenz angepasst wird. Für die Wechselstrom-Ladespannung muss zusätzlich eine Wechselrichtung durchgeführt werden.

Vorteilhafterweise ist die Wechselstrom-Eingangsspannung eine Spannung zwischen 1 kV und 52 kV, vorzugsweise zwischen 10 kV und 30 kV; und/oder ist die Wechselstrom-Ladespannung und/oder die Gleichstrom-Ladespannung eine Spannung zwischen 200 V und 1000 V, vorzugsweise zwischen 350 V und 450 V. Übliche Mittelspannungsnetze werden mit 10, 20 oder 30 kV betrieben. Ladevorgänge von modernen Elektroautos finden oft bei Spannungen von 400 oder 800 V statt. Durch die Verwendung höherer Spannungen können die Ströme auch bei größeren Leistungen begrenzt werden. Die Verwendung von dicken Kabeln ist nicht notwendig.

In einer bevorzugten Ausgestaltung ist die Ladestation als freistehende Ladesäule ausgebildet. Derartige freistehende Ladesäulen können beispielsweise im öffentlichen Verkehrsraum oder auch an Parkplätzen oder in Tiefgaragen verwendet werden. Durch einen Mittelspannungs-Netzanschluss kann ein schnelles Laden erreicht werden.

In einer bevorzugten Ausgestaltung umfasst die Ladestation eine Messeinheit zum Ermitteln eines Verbrauchswerts, der die von dem Elektromobil bezogene Ladeenergie beschreibt. Die Messeinheit erlaubt es, die an das Elektromobil transferierte Ladeenergie zu messen. Hierdurch wird eine Abrechnung der bezogenen Ladeleistung gegenüber dem Netzbetreiber bzw. gegenüber dem Bereitsteller der Ladestation ermöglicht. Vorzugsweise umfasst die Messeinheit ein Strommessgerät. Durch die Bereitstellung einer Messeinheit direkt innerhalb der Ladestation kann eine einfache und gesicherte Abrechnung erfolgen. Ein Betrug wird erschwert.

In einer weiteren Ausgestaltung umfasst die Ladestation eine Laststeuerungseinheit zum Festlegen einer bereitgestellten Ladeleistung. Durch das zusätzliche Verwenden einer Laststeuerungseinheit kann die bereitgestellte Leistung insbesondere limitiert werden. Es wird ermöglicht, dass eine zentrale Instanz regelnd und/oder steuernd eingreift, um eine Überlastung der Netze zu verhindern. Wenn beispielsweise gleichzeitig eine Vielzahl an Elektromobilen geladen werden soll, kann es zu einer Überlastung kommen. Eine Laststeuerungseinheit erlaubt sozusagen eine Drosselung der an einer einzelnen Ladestation bereitgestellten Leistung. Eine Überlastung wird vermieden.

In einer weiteren vorteilhaften Ausgestaltung umfasst die Ladestation eine Kontrolleinheit zum Steuern der Netzanschlusseinheit, um die Anbindung an den Mittelspannungsnetzabschnitt zu beeinflussen; der Ladeeinheit, um einen Ladevorgang des Elektromobils zu beeinflussen; und/oder der Transformatoreinheit, um die Umwandlung zu beeinflussen. Hierbei kann eine Beeinflussung insbesondere eine Steuerung und/oder eine Regelung umfassen. Sowohl die Netzanschlusseinheit als auch die Ladeeinheit und die Transformatoreinheit können separat beeinflusst werden. Unter einem Beeinflussen versteht sich dabei insbesondere eine Einstellung von Parametern, um die Funktionen der Einheiten anzupassen. Es werden die Eigenschaften der verschiedenen Einheiten im Betrieb modifiziert. Es wird erreicht, dass je nach Art des zu ladenden Elektromobils ein optimierter Ladevorgang durchgeführt werden kann. Die Kontrolleinheit kann dabei beispielsweise bei einer Laststeuerung mitwirken. Es ist auch möglich, dass die Kontrolleinheit sicherheitsrelevante Funktionen, wie zum Beispiel das Abtrennen vom Mittelspannungsnetz, umsetzt.

In einer vorteilhaften Ausgestaltung umfasst die Ladestation eine Kommunikationseinheit die vorzugsweise als Mobilkommunikationseinheit ausgebildet ist, zum Kommunizieren mit einem Abrechnungssystem, um den Verbrauchswert zu übermitteln; einem Laststeuerungssystem, um Lastparameter der Laststeuerungseinheit zum Festlegen der Ladeleistung festzulegen; und/oder einem Kontrollsystem, um Kontrollparameter der Kontrolleinheit festzulegen. Die Kommunikationseinheit ermöglicht es, dass eine Kommunikationsverbindung mit einem anderen System hergestellt wird. Insbesondere kann mit einer zentralen Instanz (z.B. zentraler Server, Kontrollsystem etc.) kommuniziert werden. Beispielsweise kann durch eine Kommunikation mit einem Abrechnungssystem eine Abrechnung der vom Elektromobil aufgenommenen elektrischen Leistung erfolgen. Von einem zentralen Laststeuerungssystem kann eine Festlegung der bereitgestellten Leistung vorgenommen werden. Eine zentrale Steuerung kann über die Kontrolleinheit erfolgen. Durch die Kommunikationseinheit wird es damit ermöglicht, dass eine Vor-Ort-Wartung sowie ein Vor-Ort-Zugriff auf die Ladestation weitgehend vermieden werden können, sodass Kosten gespart werden.

In einer weiteren vorteilhaften Ausgestaltung umfasst die Netzanschlusseinheit eine Sicherungseinheit zum Verhindern und/oder Begrenzen der Wirkung eines Störlichtbogens; ein Isoliermedium zum Isolieren der Wechselstrom-Eingangsspannung; und/oder eine Abtrenneinheit zum Abtrennen der Transformatoreinheit von der Wechselstrom-Eingangsspannung. Verschiedene Sicherheitsfunktionen können realisiert werden. Dies ist insbesondere erforderlich, da die Wechselstrom-Eingangsspannung eine andere Behandlung als die bisher übliche Niederspannung notwendig macht. So muss beispielsweise ein Störlichtbogen verhindert bzw. in seiner Wirkung begrenzt werden und ein geeignetes Isoliermedium verwendet werden. Durch die Abtrenneinheit kann ein Abtrennen vom Mittelspannungsnetz erfolgen, das beispielsweise dann erforderlich ist, wenn bei einem Defekt eine Reparatur vorgenommen oder die Transformatoreinheit ausgetauscht werden muss. Die Sicherheit wird erhöht. Eine möglichst hohe Verfügbarkeit wird sichergestellt.

In einer vorteilhaften Ausgestaltung umfasst das erfindungsgemäße System ein Abrechnungssystem zum Empfangen eines Verbrauchswerts, um darauf basierend eine Abrechnung durchzuführen; ein Laststeuerungssystem zum Übermitteln von Lastparametern an eine Laststeuerungseinheit der Ladestation, um die von der Ladestation bereitgestellte Ladeleistung festzulegen; und/oder ein Kontrollsystem zum Festlegen von Kontrollparametern einer Kontrolleinheit einer Ladestation, um eine Netzanschlusseinheit, eine Ladeeinheit und/oder eine Transformatoreinheit einer Ladestation zu steuern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendet werden können, ohne den Rahmen der vorliegenden Erfindung zu verlassen. Die Erfindung wir nachfolgend anhand einiger ausgewählter Ausführungsbeispiele im Zusammenhang mit den beiliegenden Zeichnungen näher beschrieben und erläutert. Es zeigen:
- Figur 1: eine schematische Darstellung einer erfindungsgemäßen Ladestation zum Laden einer Batterie eines Elektromobils;
- Figur 2: eine schematische Darstellung einer Transformatoreinheit zur Verwendung in einer Ladestation;
- Figur 3: eine schematische Darstellung einer Netzanschlusseinheit zur Verwendung in einer Ladestation;
- Figur 4: eine schematische Darstellung einer weiteren Ausführungsform der Ladestation;
- Figur 5: eine schematische Darstellung eines erfindungsgemäßen Systems zum Laden einer Batterie eines Elektromobils;
- Figur 6: eine schematische Darstellung einer weiteren Ausführungsform des Systems; und
- Figur 7: eine schematische Darstellung eines erfindungsgemäßen Verfahrens.

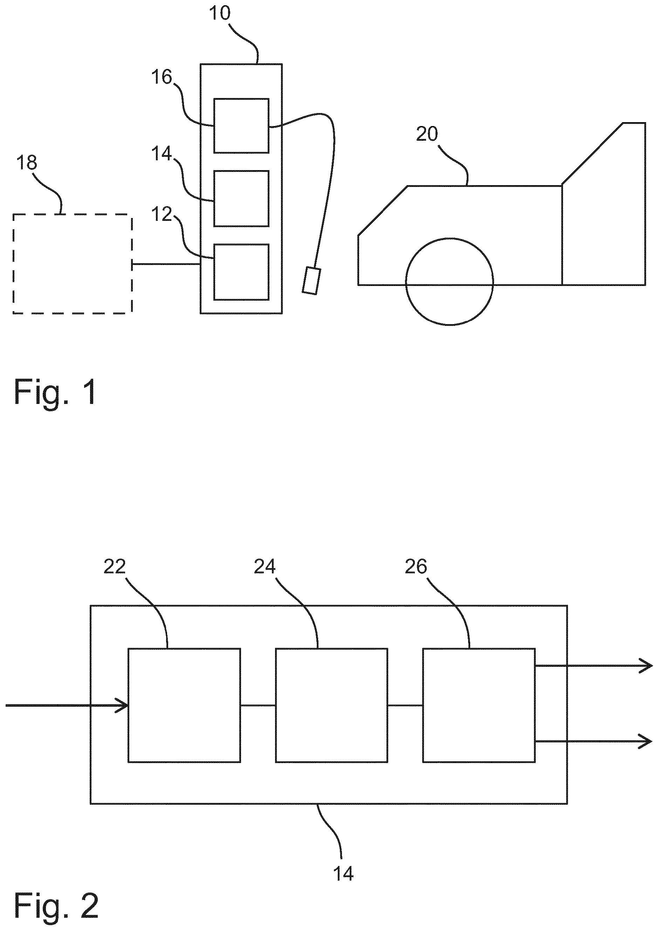

In der Figur 1 ist eine erfindungsgemäße Ladestation 10 schematisch dargestellt. Die Ladestation umfasst eine Netzanschlusseinheit 12, eine Transformatoreinheit 14 sowie eine Ladeeinheit 16. Über die Netzanschlusseinheit 12 ist die Ladestation 10 an einen Mittelspannungsnetzabschnitt 18, also an ein Mittelspannungsnetz, angebunden (gestrichelt dargestellt, da nicht zur Ladestation 10 gehörend). Über die Ladeeinheit 16 kann ein Elektromobil 20 angeschlossen werden, um die Batterie des Elektromobils 20 zu laden. In der Transformatoreinheit 14 wird die Eingangsspannung transformiert, sodass sowohl eine Gleich- als auch eine Wechselstrom-Ladespannung bereitgestellt werden können.

Die erfindungsgemäße Ladestation 10 basiert darauf, dass ein Anschluss direkt an das Mittelspannungsnetz erfolgt. Es wird also nicht auf das Niederspannungsnetz zurückgegriffen, sondern direkt eine Wechselstrom-Eingangsspannung mit einer Spannung von beispielsweise 10, 20 oder 30 kV verwendet. In der Transformatoreinheit 14 findet dann eine Transformation bzw. eine Übertragung auf eine wesentlich geringere Ladespannung statt.

Durch den direkten Anschluss an den Mittelspannungsnetzabschnitt 18 wird erreicht, dass trotz einer hohen elektrischen Ladeleistung nur ein vergleichsweise geringer Ladestrom bezogen werden muss. Es kann also auf vergleichsweise dünne Kabelquerschnitte zurückgegriffen werden. Das Niederspannungsnetz, das aufgrund seiner Architektur oft nicht dazu ausgelegt ist, das gleichzeitige Laden einer höheren Anzahl von Elektromobilen zur erlauben, wird geschont. Es ist nicht notwendig, dass in den Umspannstationen zwischen Mittelspannungs- und Niedrigspannungsnetz eine ausreichende Kapazität vorgehalten wird, um gegebenenfalls eine hohe Anzahl an Elektromobilen zu laden.

Die dargestellte Ladestation 10 ist als freistehende Ladesäule ausgebildet. Die Ladesäule kann dabei insbesondere im öffentlichen Verkehrsraum, an einem Parkplatz oder in einem Parkhaus angebracht sein. Insbesondere kann ein Schnellladen ermöglicht werden. Die Bauform ist klein genug, um ein effizientes und flexibles Aufstellen zu erlauben.

Das gleichzeitige Bereitstellen einer Wechsel- und einer Gleichstrom-Ladespannung erlaubt eine flexible Verwendung der Ladestation. Es können Elektromobile mit oder ohne eigenem Ladegerät geladen werden. Üblicherweise ist ein Schalter oder eine andere Einstellmöglichkeit zur Auswahl der Spannungsform für das gerade angeschlossene Elektromobil vorgesehen. Vorteilhafterweise ist eine Einrichtung vorgesehen, durch die sichergestellt wird, dass nur die jeweils korrekte Spannungsform an ein Elektromobil weitergeleitet wird. Zum Beispiel können verschiedene Stecker verwendet werden.

In der Figur 2 ist eine Ausführungsform der Transformatoreinheit 14 in einer schematischen Detailansicht dargestellt. Die Transformatoreinheit 14 ist als Solid State Transformator (SST) ausgebildet. Ein derartiger SST erlaubt das gleichzeitige Bereitstellen einer Gleichspannung und einer Wechselspannung. Im Gegensatz zu einem konventionellen Wicklungstransformator wird hierzu eine Mittelfrequenzübertragung ausgeführt.

Zunächst wird die eingehende Wechselstrom-Eingangsspannung mittels einer eingangsseitigen (primärseitigen) Leistungselektronikeinheit 22 gleichgerichtet und in ihrer Frequenz angepasst. Insbesondere wird eine Erhöhung der Frequenz durchgeführt. Zudem wird sozusagen durch eine Zerhackung der Eingangsspannung eine pulsierende Gleichspannung erzeugt. Die Pulsfrequenz wird dabei gegenüber der Eingangsspannung deutlich erhöht. Vorzugsweise wird eine Frequenz von mehreren kHz, beispielsweise 5 kHz erzeugt.

Weiterhin umfasst die Transformatoreinheit 14 in der dargestellten Ausführungsform eine Übertragungseinheit 24, die der primärseitigen Leistungselektronikeinheit 22 nachgeschaltet ist. Der Ausgang der primärseitigen Leistungselektronikeinheit 22 ist mit der Übertragungseinheit 24 verbunden. In der Übertragungseinheit 24 findet die eigentliche galvanische Entkopplung zwischen Primär- und Sekundärseite statt. Es wird eine Hochfrequenztransformation bzw. -übertragung durchgeführt. Die Frequenz kann dabei beispielsweise zwischen 100 Hz und 50 kHz liegen, wobei bevorzugt eine Übertragung im kHz-Bereich verwendet wird. Eine derartige Hochfrequenzübertragung bedingt, dass die gesamte Baugröße der Transformatoreinheit 14 gegenüber einem herkömmlichen Transformatoraufbau deutlich verringert wird.

Der Übertragungseinheit 24 nachgeschaltet befindet sich ausgangsseitig eine sekundärseitige Leistungselektronikeinheit 26. Diese sekundärseitige Leistungselektronikeinheit 26 ist an den Ausgang der Übertragungseinheit 24 angekoppelt und wird mit der transformierten Spannung versorgt. Beispielsweise liefert die Übertragungseinheit 24 eine Spannung von 400 oder 800 V. Es wird eine Gleichspannung (pulsierende Gleichspannung) bereitgestellt. Diese Gleichspannung wird in der sekundärseitigen Leistungselektronik 26 zunächst in ihrer Frequenz angepasst, um als Gleichstrom-Ladespannung zur Verfügung gestellt zu werden. Zudem ist die sekundärseitige Leistungselektronik 26 dazu ausgebildet, durch eine Wechselrichtung ebenfalls eine Wechselstrom-Ladespannung bereitzustellen. Sowohl die Gleichstrom-Ladespannung als auch die Wechselstrom-Ladespannung können zum Laden des Elektromobils verwendet werden.

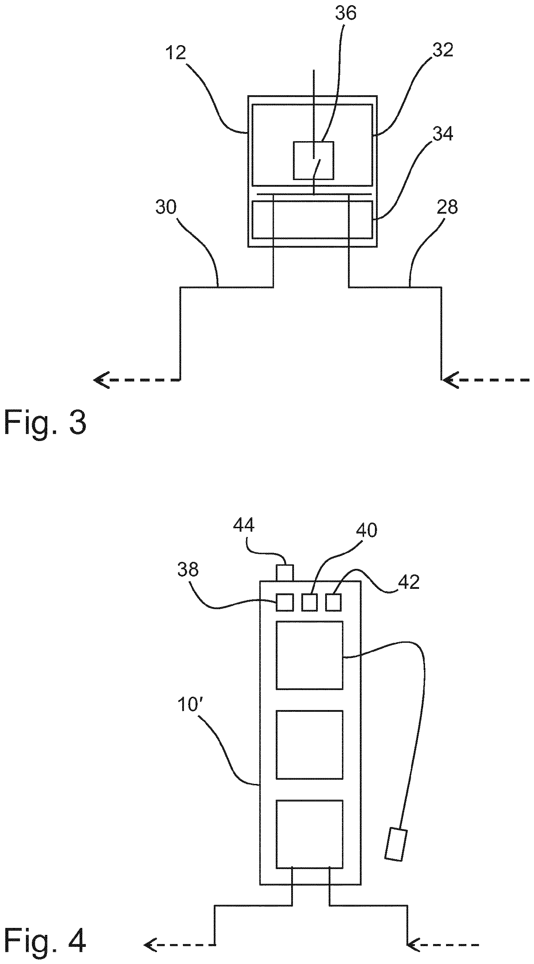

In der Figur 3 findet sich eine detailliertere schematische Darstellung der Netzanschlusseinheit 12. In der dargestellten Ausführungsform ist die Netzanschlusseinheit zum Einfügen in ein Ringnetz ausgebildet. Es gibt insoweit einen Spannungseingang 28 und einen Spannungsausgang 30. Alternativ wäre auch die Verwendung eines Abzweigs, beispielsweise einer T-Muffe, möglich, die aufgrund der vergleichsweise hohen Spannung jedoch eine komplexere Implementierung notwendig machen würde.

Innerhalb der Netzanschlusseinheit befindet sich eine Sicherungseinheit 32, durch die ein Störlichtbogen verhindert und/oder dessen Auswirkungen begrenzt wird. Insbesondere umfasst die Sicherungseinheit 32 dazu eine entsprechende Isolation. Zusätzlich ist ein Isoliermedium 34 vorgesehen, durch das die Anschlussstelle und alle mittelspannungsführenden Teile, also insbesondere der Anschlussstecker am Spannungseingang 28 sowie am Spannungsausgang 30 isoliert werden.

Um ein Abtrennen der Transformatoreinheit zu ermöglichen, sodass beispielsweise eine Wartung durchgeführt oder ein Austausch vorgenommen werden kann, umfasst die Netzanschlusseinheit 12 eine Abtrenneinheit 36. Diese Abtrenneinheit ist beispielsweise als lösbarer Schalter ausgebildet. Eine Verbindung zwischen Mittelspannungsnetz und Netzanschluss- bzw. Transformatoreinheit kann gelöst werden. Die höhere Mittelspannung macht dabei einen aufwändigeren Aufbau des Netzanschlusses im Vergleich zu herkömmlichen Ladestationen bzw. Ladesäulen erforderlich.

In der Figur 4 ist eine weitere Ausführungsform einer als Ladesäule ausgebildeten erfindungsgemäßen Ladestation 10' dargestellt. Die Ladestation 10' umfasst eine Messeinheit 38, eine Kontrolleinheit 40, eine Laststeuerungseinheit 42 sowie eine Kommunikationseinheit 44. Es versteht sich, dass die vorstehend genannten Einheiten optional sind und dass es in anderen Ausführungsformen der Ladestation 10' auch möglich ist, dass nur eine Auswahl der Einheiten umfasst ist. Ebenfalls ist es möglich, dass die im Folgenden erwähnten Funktionen der Einheiten von kombinierten Einheiten erfüllt werden, insoweit also eine einzelne Einheit die Funktion mehrerer Einheiten bereitstellt. Es versteht sich zudem, dass die Funktionen der genannten Einheiten teilweise oder vollständig in Hard- und/oder in Software implementiert sein können. Insbesondere kann ein Mikrocontroller vorgesehen sein, der verschiedene Funktionen der zuvor genannten Einheiten teilweise oder vollständig umsetzt.

Die Messeinheit 38 kann insbesondere einen Strommesser umfassen, mit dem der an das Elektromobil übertragene Stromfluss gemessen werden kann. Es wird die übertragene Ladeleistung gemessen. Basierend auf einer derartigen Messung kann eine Abrechnung, also ein Bezahlen der bezogenen Ladeleistung durch den Eigentümer des Elektromobils, erfolgen. Sowohl die über die Wechselstrom-Ladespannung bereitgestellte Leistung als auch die über die Gleichstrom-Ladespannung bereitgestellte Leistung können dabei in der Messeinheit 38 gemessen und überwacht werden.

Über die Kontrolleinheit können die verschiedenen Parameter der Einheiten der Ladestation 10' gesteuert werden. Beispielsweise kann festgelegt werden, dass in der Netzanschlusseinheit die Anbindung an das Mittelspannungsnetz getrennt wird. Zudem können Parameter der Messung in der Messeinheit 38 festgelegt werden (beispielsweise Messfrequenz, Auflösung, Dauer etc.). Ebenfalls ist es möglich, dass einzelne Ausgänge an- und ausgeschaltet werden. Insbesondere kann über die Kontrolleinheit 40 festgelegt werden, ob eine Gleich- oder eine Wechselspannung zur Verfügung gestellt wird. Es versteht sich, dass auch weitere Steuerungsfunktionen ermöglicht werden können.

Die Laststeuerungseinheit 42 ist dazu ausgebildet, die bereitgestellte Ladeleistung festzulegen. Beispielsweise kann es erforderlich sein, dass eine maximale Ladeleistung vorübergehend begrenzt wird. Hierzu funktioniert die Laststeuerungseinheit 42 als Drosselung. Die Laststeuerungseinheit 42 kann dabei auch in die primär- oder sekundärseitige Leistungselektronik integriert sein.

Über die Kommunikationseinheit 44 kann eine Kommunikationsverbindung (drahtgebunden oder auch drahtlos) mit einem entfernten Kommunikationspartner hergestellt werden. Insbesondere ist es möglich, dass eine Kommunikationsverbindung mit einer zentralen Einheit hergestellt wird. Es ist aber auch möglich, dass eine Kommunikation mit einem in das Elektromobil integrierten korrespondierenden Kommunikationssystem hergestellt wird. Die Kommunikationseinheit 44 kann dabei beispielsweise als Mobilkommunikationseinheit, also als GSM-Modul oder ähnliches implementiert sein. Es ist auch möglich, dass die Kommunikationseinheit 44 als Niedrigenergie-Kurzstreckenkommunikationseinheit ausgebildet ist, beispielsweise als Zigbee- oder Bluetoothmodul.

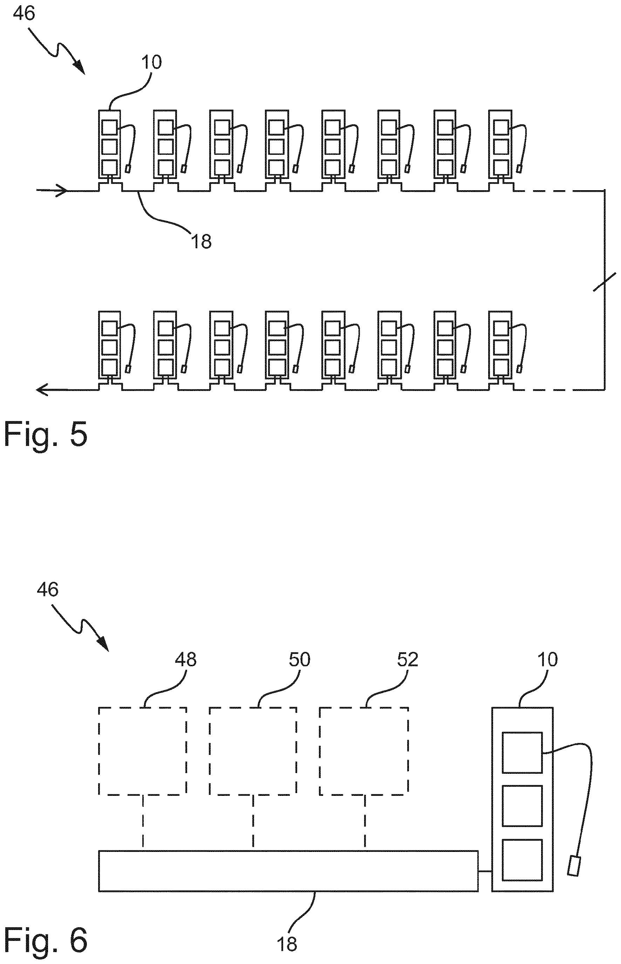

In der Figur 5 ist ein erfindungsgemäßes System 46 zum Laden eines Elektromobils dargestellt. Neben zumindest einer Ladestation 10 umfasst das System 46 einen Mittelspannungsnetzabschnitt 18. Der Mittelspannungsnetzabschnitt 18 versteht sich dabei als Teil eines Mittelspannungsnetzes, insbesondere als die entsprechende Verkabelung im Bereich der Ladestation.

Wie dargestellt sind vorzugsweise eine Anzahl an Ladestationen 10 in Reihe geschaltet (Ringschaltung). Jede Ladestation verfügt dabei über einen entsprechenden Spannungseingang und einen Spannungsausgang. Eine derartige Konfiguration kann beispielsweise auf einem Park- oder Rastplatz oder in einem ähnlichen Umfeld vorteilhaft sein, wenn mehrere Ladestationen notwendig sind. Die Anzahl der verwendeten Ladestationen ist dabei nur durch einen maximalen Stromfluss im Mittelspannungsnetzabschnitt 18 begrenzt. Beispielsweise kann ein derartiger maximaler Stromfluss im Bereich von 300 A liegen, was bei einer Spannung von 20 kV in einer sehr hohen insgesamt potentiell verfügbaren Ladeleistung resultiert.

In der Figur 6 ist das erfindungsgemäße System 46 in anderer Weise dargestellt. Neben der Ladestation 10 und dem Mittelspannungsnetzabschnitt 18 kann das System 46 zudem ein Abrechnungssystem 48, ein Laststeuerungssystem 50 sowie ein Kontrollsystem 52 umfassen, die ihrerseits ebenfalls an den Mittelspannungsnetzabschnitt 18 angebunden sein können.

Das Abrechnungssystem 48 dient dabei zur Durchführung einer Abrechnung. Es werden also die bezogenen Ladeleistungen, die innerhalb der Ladestation 10 gemessen wurden, abgerechnet. Beispielsweise wird mit einer Bank oder einem Kreditkartenanbieter kommuniziert, um eine entsprechende Umbuchung vorzunehmen.

Das Laststeuerungssystem 50 ist vorzugsweise ebenfalls an dem Mittelspannungsnetzabschnitt 18 angeschlossen und überwacht eine Spannung des Mittelspannungsnetzabschnitts 18. Sobald die überwachte Spannung um einen vorgegebenen Schwellwert abfällt, werden einzelne Ladestationen in ihrer Leistung heruntergeregelt. Hierdurch wird erreicht, dass es nicht zu einem Ausfall kommt und die Versorgungssicherheit gewährleistet bleibt.

Das Kontrollsystem 52 dient dazu, mit der Kontrolleinheit in der Ladestation 10 zu kommunizieren, um die entsprechend erforderlichen Kontrollparameter vorzunehmen. Insbesondere kann eine Steuerung ausgehend vom Kontrollsystem 52 erfolgen. Es können die optimalen Betriebsparameter vorgegeben werden und aktualisiert werden.

Auch die vorstehend genannten Systeme 48, 50 und 52 können einzeln oder in Kombination ausgeführt sein können. Insbesondere kann ein Zentralsystem, das beispielsweise von einem Netzbetreiber betrieben wird, die Funktionen der zuvor genannten Systeme erbringen. Die Kommunikation kann dabei über das Internet erfolgen.

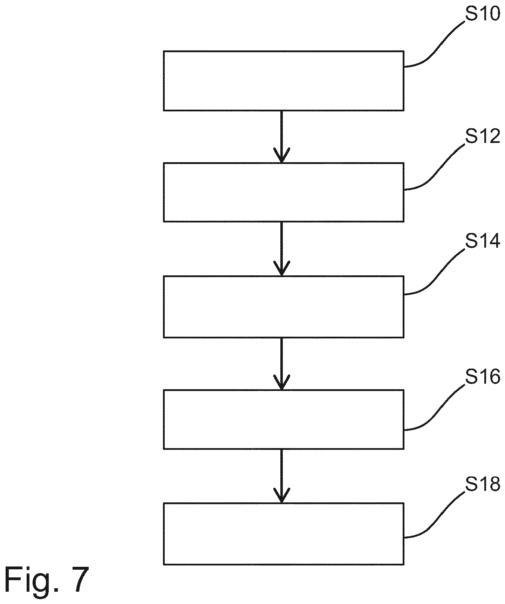

In der Figur 7 ist das erfindungsgemäße Verfahren schematisch illustriert. Die Schritte des Anbindens S10 der Ladestation an den Mittelspannungsnetzabschnitt, des Beziehens S12 der Eingangsspannung, des Umwandelns S14 der Spannung, des Bereitstellens S16 der Ladespannungen und des Ankoppelns S18 des Elektromobils können vollständig oder teilweise automatisiert ausgeführt werden.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die verschiedenen Einheiten können teilweise oder vollständig in Hard- oder auch in Software ausgeführt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Ladestation (10, 10') zum Laden einer Batterie eines Elektromobils (20), mit:
einer Netzanschlusseinheit (12) zum Anbinden der Ladestation an einen Mittelspannungsnetzabschnitt (18) und zum Beziehen einer Wechselstrom-Eingangsspannung, wobei die Wechselstrom-Eingangsspannung eine Mittelspannung ist;
einer Transformatoreinheit (14) zum Umwandeln der Wechselstrom-Eingangsspannung und zum Bereitstellen einer Wechselstrom-Ladespannung und einer Gleichstrom-Ladespannung; und
einer Ladeeinheit (16) zum Ankoppeln des Elektromobils, um die Batterie des Elektromobils mit der bereitgestellten Wechselstrom-Ladespannung und/oder der bereitgestellten Gleichstrom-Ladespannung zu laden,
wobei die Ladestation als Ladesäule oder als Wandladestation ausgebildet ist.

2. Ladestation (10, 10') nach Anspruch 1, wobei die Transformatoreinheit (14) als Solid State Transformator, SST, ausgebildet ist.

3. Ladestation (10, 10') nach einem der vorstehenden Ansprüche, wobei die Transformatoreinheit (14) eine Übertragungseinheit (24) zum Ausführen einer Mittelfrequenzübertragung zur Spannungstransformation, vorzugsweise mit einer Frequenz zwischen 100 Hz und 50 kHz, umfasst.

4. Ladestation (10, 10') nach einem der vorstehenden Ansprüche, wobei die Transformatoreinheit (14) eine primärseitige Leistungselektronikeinheit (22) umfasst, die dazu ausgebildet ist, eine Gleichrichtung und eine Frequenzanpassung der Wechselstrom-Eingangsspannung durchzuführen.

5. Ladestation (10, 10') nach einem der vorstehenden Ansprüche, wobei die Transformatoreinheit (14) eine sekundärseitige Leistungselektronikeinheit (26) umfasst, die dazu ausgebildet ist,
eine Frequenzanpassung durchzuführen, um die Gleichstrom-Ladespannung zu erzeugen; und
eine Frequenzanpassung und eine Wechselrichtung durchzuführen, um die Wechselstrom-Ladespannung zu erzeugen.

6. Ladestation (10, 10') nach einem der vorstehenden Ansprüche, wobei
die Wechselstrom-Eingangsspannung eine Spannung zwischen 1 kV und 52 kV, vorzugsweise zwischen 10 kV und 30 kV, ist; und/oder
die Wechselstrom-Ladespannung und/oder die Gleichstrom-Ladespannung eine Spannung zwischen 200 V und 1000 V, vorzugsweise zwischen 350 V und 450 V, ist.

7. Ladestation (10, 10') nach einem der vorstehenden Ansprüche, wobei die Ladestation als freistehende Ladesäule ausgebildet ist.

8. Ladestation (10, 10') nach einem der vorstehenden Ansprüche mit einer Messeinheit (38) zum Ermitteln eines Verbrauchswerts, der die von dem Elektromobil (20) bezogene Ladeenergie beschreibt.

9. Ladestation (10, 10') nach einem der vorstehenden Ansprüche mit einer Laststeuerungseinheit (42) zum Festlegen einer bereitgestellten Ladeleistung.

10. Ladestation (10, 10') nach einem der vorstehenden Ansprüche mit einer Kontrolleinheit (40) zum Steuern
der Netzanschlusseinheit (12), um die Anbindung an den Mittelspannungsnetzabschnitt (18) zu beeinflussen;
der Ladeeinheit (16), um einen Ladevorgang des Elektromobils (20) zu beeinflussen; und/oder
der Transformatoreinheit (14), um die Umwandlung zu beeinflussen.

11. Ladestation (10, 10') nach einem der Ansprüche 8 bis 10 mit einer Kommunikationseinheit (44), die vorzugsweise als Mobilkommunikationseinheit ausgebildet ist, zum Kommunizieren mit
einem Abrechnungssystem (48), um den Verbrauchswert zu übermitteln;
einem Laststeuerungssystem (50), um Lastparameter der Laststeuerungseinheit (42) zum Regeln der Ladeenergie festzulegen; und/oder
einem Kontrollsystem (52), um Kontrollparameter der Kontrolleinheit (40) festzulegen.

12. Ladestation (10, 10') nach einem der vorstehenden Ansprüche, wobei die Netzanschlusseinheit (12)
eine Sicherungseinheit (32) zum Verhindern und/oder Begrenzen der Wirkung eines Störlichtbogens;
ein Isoliermedium (34) zum Isolieren der Wechselstrom-Eingangsspannung; und/oder
eine Abtrenneinheit (36) zum Abtrennen der Transformatoreinheit (14) von der Wechselstrom-Eingangsspannung umfasst.

13. Verfahren zum Laden einer Batterie eines Elektromobils (20), mit den Schritten:
Anbinden (S10) einer Ladestation (10, 10') nach Anspruch 1 an einen Mittelspannungsnetzabschnitt und Beziehen (S12) einer Wechselstrom-Eingangsspannung, wobei die Wechselstrom-Eingangsspannung eine Mittelspannung ist;
Umwandeln (S14) der Wechselstrom-Eingangsspannung und Bereitstellen (S16) einer Wechselstrom-Ladespannung und einer Gleichstrom-Ladespannung; und
Ankoppeln (S18) des Elektromobils, um die Batterie des Elektromobils mit der bereitgestellten Wechselstrom-Ladespannung und/oder der bereitgestellten Gleichstrom-Ladespannung zu laden,
wobei die Ladestation als Ladesäule oder als Wandladestation ausgebildet ist.

14. System (46) zum Laden einer Batterie eines Elektromobils (20), mit:
einer Ladestation (10, 10') nach einem der Ansprüche 1 bis 12; und
einem Mittelspannungsnetzabschnitt (18), an den die Ladestation angebunden ist, um die Wechselstrom-Eingangsspannung zu beziehen.

15. System (46) nach Anspruch 14, mit:
einem Abrechnungssystem (48) zum Empfangen eines Verbrauchswerts, um darauf basierend eine Abrechnung durchzuführen;
einem Laststeuerungssystem (50) zum Übermitteln von Lastparametern an eine Laststeuerungseinheit (42) der Ladestation, um die von der Ladestation (10, 10') bereitgestellte Ladeenergie zu regeln; und/oder
einem Kontrollsystem (52) zum Festlegen von Kontrollparametern einer Kontrolleinheit (40) einer Ladestation, um eine Netzanschlusseinheit (12), eine Ladeeinheit (16) und/oder eine Transformatoreinheit (14) einer Ladestation zu steuern.

## Claims

1. Charging station (10, 10') for charging a battery of an electric vehicle (20), comprising:
a mains connection unit (12) for connecting the charging station to a medium-voltage mains section (18) and for obtaining an alternating current input voltage, wherein the alternating current input voltage is a medium voltage;
a transformer unit (14) for converting the alternating current input voltage and for providing an alternating current charging voltage and a direct current charging voltage; and
a charging unit (16) for coupling the electric vehicle in order to charge the battery of the electric vehicle with the provided alternating current charging voltage and/or the provided direct current charging voltage,
wherein the charging station is designed as a charging column or as a wallbox.

2. Charging station (10, 10') according to claim 1, wherein the transformer unit (14) is designed as a solid-state transformer, SST.

3. Charging station (10, 10') according to any one of the preceding claims, wherein the transformer unit (14) comprises a transmission unit (24) for performing a medium-frequency transmission for voltage transformation, preferably at a frequency between 100 Hz and 50 kHz.

4. Charging station (10, 10') according to any one of the preceding claims, wherein the transformer unit (14) comprises a primary-side power electronics unit (22) which is designed to rectify and adjust the frequency of the alternating current input voltage.

5. Charging station (10, 10') according to any one of the preceding claims, wherein the transformer unit (14) comprises a secondary-side power electronics unit (26) which is designed
to perform a frequency adjustment in order to generate the direct current charging voltage; and
to perform a frequency adjustment and inversion in order to generate the alternating current charging voltage.

6. Charging station (10, 10') according to any one of the preceding claims, wherein
the alternating current input voltage is a voltage between 1 kV and 52 kV, preferably between 10 kV and 30 kV; and/or
the alternating current charging voltage and/or the direct current charging voltage is a voltage between 200 V and 1000 V, preferably between 350 V and 450 V.

7. Charging station (10, 10') according to any one of the preceding claims, wherein the charging station is designed as a free-standing charging column.

8. Charging station (10, 10') according to any one of the preceding claims, comprising a measuring unit (38) for determining a consumption value which describes the charging energy drawn by the electric vehicle (20).

9. Charging station (10, 10') according to any one of the preceding claims, comprising a load control unit (42) for setting a provided charging power.

10. Charging station (10, 10') according to any one of the preceding claims, comprising a control unit (40) for controlling
the mains connection unit (12) in order to influence the connection to the medium-voltage mains section (18);
the charging unit (16) in order to influence a charging procedure of the electric vehicle (20); and/or
the transformer unit (14) in order to influence the conversion.

11. Charging station (10, 10') according to any one of claims 8 to 10, comprising a communication unit (44), which is preferably designed as a mobile communication unit, for communicating with
a billing system (48) in order to transmit the consumption value;
a load control system (50) in order to set load parameters of the load control unit (42) for regulating the charging energy; and/or
a control system (52) in order to define control parameters of the control unit (40).

12. Charging station (10, 10') according to any one of the preceding claims, wherein the mains connection unit (12) comprises
a protection unit (32) for preventing and/or limiting the effect of an arc fault;
an insulating medium (34) for insulating the alternating current input voltage; and/or
a separating unit (36) for separating the transformer unit (14) from the alternating current input voltage.

13. Method for charging a battery of an electric vehicle (20), comprising the steps:
connecting (S10) a charging station (10, 10') according to claim 1 to a medium-voltage mains section and obtaining (S12) an alternating current input voltage, wherein the alternating current input voltage is a medium voltage;
converting (S14) the alternating current input voltage and providing (S16) an alternating current charging voltage and a direct current charging voltage; and
coupling (S18) the electric vehicle in order to charge the battery of the electric vehicle with the provided alternating current charging voltage and/or the provided direct current charging voltage,
wherein the charging station is designed as a charging column or as a wallbox.

14. System (46) for charging a battery of an electric vehicle (20), comprising:
a charging station (10, 10') according to any one of claims 1 to 12; and
a medium-voltage mains section (18) to which the charging station is connected in order to obtain the alternating current input voltage.

15. System (46) according to claim 14, comprising:
a billing system (48) for receiving a consumption value in order to perform billing based thereon;
a load control system (50) for transmitting load parameters to a load control unit (42) of the charging station in order to regulate the charging energy provided by the charging station (10, 10'); and/or
a control system (52) for setting control parameters of a control unit (40) of a charging station in order to control a mains connection unit (12), a charging unit (16) and/or a transformer unit (14) of a charging station.

## Revendications

1. Station de recharge (10, 10') pour recharger une batterie d'un véhicule électrique (20), comportant :
une unité de raccordement au réseau (12) pour relier la station de recharge à un segment de réseau moyenne tension (18) et pour prélever une tension d'entrée en courant alternatif, la tension d'entrée en courant alternatif étant une moyenne tension ;
une unité de transformation (14) pour convertir la tension d'entrée en courant alternatif et pour fournir une tension de charge en courant alternatif et une tension de charge en courant continu ; et
une unité de recharge (16) pour accoupler le véhicule électrique, afin de recharger la batterie du véhicule électrique avec la tension de charge en courant alternatif fournie et/ou la tension de charge en courant continu fournie, la station de recharge étant réalisée en tant que borne de recharge ou station de recharge murale.

2. Station de recharge (10, 10') selon la revendication 1, l'unité de transformation (14) étant réalisée en tant que Solid State Transformator, SST.

3. Station de recharge (10, 10') selon l'une des revendications précédentes, l'unité de transformation (14) comprenant une unité de transmission (24) pour effectuer une transmission de moyenne fréquence vers la transformation de tension, de préférence avec une fréquence comprise entre 100 Hz et 50 kHz.

4. Station de recharge (10, 10') selon l'une des revendications précédentes, l'unité de transformation (14) comprenant une unité électronique de puissance côté primaire (22) qui est conçue pour effectuer un redressement et un ajustement de fréquence de la tension d'entrée en courant alternatif.

5. Station de recharge (10, 10') selon l'une des revendications précédentes, l'unité de transformation (14) comprenant une unité électronique de puissance côté secondaire (26) qui est conçue pour :
effectuer un ajustement de fréquence pour générer la tension de charge en courant continu ; et
effectuer un ajustement de fréquence et une ondulation pour générer la tension de charge en courant alternatif.

6. Station de recharge (10, 10') selon l'une des revendications précédentes,
la tension d'entrée en courant alternatif étant une tension comprise entre 1 kV et 52 kV, et préférentiellement entre 10 kV et 30 kV ; et/ou
la tension de charge en courant alternatif et/ou la tension de charge en courant continu étant une tension comprise entre 200 V et 1000 V, et préférentiellement entre 350 V et 450 V.

7. Station de recharge (10, 10') selon l'une des revendications précédentes, la station de recharge étant réalisée en tant que borne de recharge individuelle.

8. Station de recharge (10, 10') selon l'une des revendications précédentes, comportant une unité de mesure (38) pour déterminer une valeur de consommation qui décrit l'énergie de recharge prélevée par le véhicule électrique (20).

9. Station de recharge (10, 10') selon l'une des revendications précédentes, comportant une unité de commande de charge (42) pour fixer une puissance de charge fournie.

10. Station de recharge (10, 10') selon l'une des revendications précédentes, comportant une unité de contrôle (40) pour commander
l'unité de raccordement au réseau (12) pour influencer le raccordement au segment de réseau moyenne tension (18) ;
l'unité de recharge (16) pour influencer l'opération de recharge du véhicule électrique (20) ; et/ou
l'unité de transformation (14) pour influencer la conversion.

11. Station de recharge (10, 10') selon l'une des revendications 8 à 10, comportant une unité de communication (44), qui est réalisée de préférence en tant qu'unité de communication mobile pour communiquer avec
un système de facturation (48) pour transmettre la valeur de consommation ;
un système de commande de charge (50) pour fixer des paramètres de charge de l'unité de commande de charge (42) pour régler l'énergie de recharge ; et/ou
un système de contrôle (52) pour fixer des paramètres de contrôle de l'unité de contrôle (40).

12. Station de recharge (10, 10') selon l'une des revendications précédentes, l'unité de raccordement au réseau (12) comprenant
une unité de sécurité (32) pour empêcher et/ou limiter l'effet d'un arc électrique parasite ;
un milieu isolant (34) pour isoler la tension d'entrée en courant alternatif ; et/ou
une unité de séparation (36) pour séparer l'unité de transformation (14) de la tension d'entrée en courant alternatif.

13. Procédé pour recharger une batterie d'un véhicule électrique (20), comportant les étapes suivantes :
raccordement (S10) d'une station de recharge (10, 10') selon la revendication 1 à un segment de réseau moyenne tension et prélèvement (S12) d'une tension d'entrée en courant alternatif, la tension d'entrée en courant alternatif étant une moyenne tension ;
conversion (S14) de la tension d'entrée en courant alternatif et fourniture (S16) d'une tension de charge en courant alternatif et d'une tension de charge en courant continu ; et
accouplement (S18) du véhicule électrique pour recharger la batterie du véhicule électrique avec la tension de charge en courant alternatif fournie et/ou la tension de charge en courant continu fournie,
la station de recharge étant réalisée en tant que borne de recharge ou station de recharge murale.

14. Système (46) pour recharger une batterie d'un véhicule électrique (20), comportant :
une station de recharge (10, 10') selon l'une des revendications 1 à 12 ; et
un segment de réseau moyenne tension (18) auquel est raccordée la station de recharge pour prélever la tension d'entrée en courant alternatif.

15. Système (46) selon la revendication 14, comportant :
un système de facturation (48) pour recevoir une valeur de consommation pour effectuer une facturation sur cette base ;
un système de commande de charge (50) pour transmettre des paramètres de charge à une unité de commande de charge (42) de la station de recharge afin de régler l'énergie de recharge fournie par la station de recharge (10, 10') ; et/ou
un système de contrôle (52) pour fixer des paramètres de contrôle d'une unité de contrôle (40) d'une station de recharge afin de commander une unité de raccordement au réseau (12), une unité de recharge (16) et/ou une unité de transformation (14) d'une station de recharge.
